# EUROPÄISCHE PATENTANMELDUNG

(11) **EP 4 682 489 A1**
(43) Veröffentlichungstag der Anmeldung: **21.01.2026**
(21) Anmeldenummer: 25184861.0
(22) Anmeldetag: 24.06.2025
(51) Int. Cl.: G01J 3/02, G02B 27/00, G02B 5/00

(54) **VERFAHREN ZUR ANPASSUNG EINER APERATURGEOMETRIE EINER APERATUR EINER APERATURBLENDE AN EINEN STRAHLENGANG VON LICHTBÜNDELN IN EINEM SPEKTROMETER**

(30) Priorität: 15.07.2024 DE 102024120014
(71) Anmelder: Analytik Jena GmbH+Co. KG, 07745 Jena (DE)
(72) Erfinder: Münch, Stefan, 10711 Berlin (DE); Okruss, Michael, 14482 Potsdam (DE); Braun, Marco, 07743 Jena (DE)
(74) Vertreter: Endress + Hauser Group Services (Deutschland) AG+Co. KG

(57) **Zusammenfassung**

Die Erfindung bezieht sich auf ein Verfahren zur Anpassung einer Aperturgeometrie einer Apertur (1) einer Aperturblende (2) an einen Strahlengang (3) von Lichtbündeln in einem Spektrometer (4), wobei das Spektrometer (4) die Aperturblende (2), mehrere optische Komponenten (5) und einen Detektor (6) aufweist, wobei das Verfahren zumindest die folgenden Schritte aufweist:
Vorgeben eines optischen Modells, welches den Strahlengang (3) beschreibt und die optischen Komponenten (5) sowie deren Position und Ausrichtung umfasst, Aufstellen einer Gütefunktion, welche mindestens ein Gütekriterium des Strahlengangs (3) beschreibt, wobei die Gütefunktion anhand des optischen Modells ein Gütemaß berechnet,
Vorgeben einer Position der Aperturblende (2) und einer Maximalfläche (8) der Apertur (1) im optischen Modell, wobei die Maximalfläche (8) aus einer Vielzahl von Subaperturen (9) zusammengesetzt ist,
Berechnen eines Gütemaßes für jede Subapertur (9) mittels der Gütefunktion, Bestimmen der Aperturgeometrie anhand der Gütemaße der Subaperturen (9).

## Beschreibung

Die Erfindung betrifft ein Verfahren zur Anpassung einer Aperturgeometrie einer Apertur einer Aperturblende an einen Strahlengang von Lichtbündeln in einem Spektrometer, wobei das Spektrometer die Aperturblende, mehrere optische Komponenten und einen Detektor aufweist, wobei die optischen Komponenten derart angeordnet und ausgestaltet sind, dass sie den Strahlengang der Lichtbündel von einer Lichtquelle zum Detektor führen, wobei der Detektor dazu ausgestaltet ist, die Lichtbündel in Form eines Spektrums zu detektieren. Die Erfindung betrifft ferner ein Verfahren zur Herstellung einer Aperturblende, deren Aperturgeometrie an einen Strahlengang von Lichtbündeln in einem Spektrometer angepasst ist, und ein Spektrometer mit mehreren optischen Komponenten, einem Detektor und einer Aperturblende.

Aperturblenden werden regelmäßig in Spektrometern eingesetzt, um die Bündelgeometrie der Lichtbündel festzulegen, indem sie einen Teil der Lichtbündel passieren lassen und einen anderen Teil für den weiteren Strahlengang blockieren. Dazu weisen sie eine, oftmals schwarze, Grundfläche mit einer Apertur auf, durch welche die Lichtbündel passieren können. Die Apertur kann verschiedene Aperturgeometrien aufweisen. Gängige Aperturgeometrien weisen beispielsweise kreisförmige, elliptische oder rechteckige Formen auf. Aperturblenden werden häufig vor einem Eintrittsspalt des Spektrometers angeordnet, d.h. an einem Punkt, an dem die Lichtbündel noch nicht spektral aufgespalten sind. Sie können jedoch auch an anderen Positionen des Strahlengangs angeordnet sein. Indem die Aperturblende die Bündelgeometrie der Lichtbündel festlegt, trägt sie in hohem Maße zur Bestimmung des geometrischen Lichtdurchsatzes (Etendue) des Spektrometers bei. Zudem bestimmt die Aperturblende zusammen mit der Brennweite des abbildenden Systems das Öffnungsverhältnis des Systems und hat großen Einfluss auf Abbildungsfehler. Durch die Wahl der Aperturblende und insbesondere der Aperturgeometrie können somit verschiedene Spektrometer-Charakteristika stark beeinflusst werden. Die gängigen Aperturgeometrien sind allerdings regelmäßig nicht passend für den im Spektrometer vorhandenen Strahlengang, so dass die Vorteile der Aperturblende hinsichtlich Abbildungsfehler u.ä. nicht optimal genutzt werden können.

Die Aufgabe der vorliegenden Erfindung ist es daher, ein Verfahren und ein Spektrometer anzugeben, welches eine Anpassung einer Aperturgeometrie an einen Strahlengang ermöglicht.

Die Aufgabe wird erfindungsgemäß gelöst durch ein Verfahren zur Anpassung einer Aperturgeometrie einer Apertur einer Aperturblende an einen Strahlengang von Lichtbündeln in einem Spektrometer nach Anspruch 1, ein Verfahren zur Herstellung einer Aperturblende nach Anspruch 14 und ein Spektrometer nach Anspruch 15.

Erfindungsgemäß wird die Aufgabe gelöst durch ein Verfahren zur Anpassung einer Aperturgeometrie einer Apertur einer Aperturblende an einen Strahlengang von Lichtbündeln in einem Spektrometer, wobei das Spektrometer die Aperturblende, mehrere optische Komponenten und einen Detektor aufweist, wobei die optischen Komponenten derart angeordnet und ausgestaltet sind, dass sie den Strahlengang der Lichtbündel von einer Lichtquelle zum Detektor führen, wobei der Detektor dazu ausgestaltet ist, die Lichtbündel in Form eines Spektrums zu detektieren, wobei das Verfahren zumindest die folgenden Schritte aufweist:
Vorgeben eines optischen Modells, welches den Strahlengang beschreibt und die optischen Komponenten sowie deren Position und Ausrichtung umfasst,
Aufstellen einer Gütefunktion, welche mindestens ein Gütekriterium des Strahlengangs umfasst, wobei die Gütefunktion dazu ausgestaltet ist, anhand des optischen Modells ein Gütemaß zu berechnen,
Vorgeben einer Position der Aperturblende und einer Maximalfläche der Apertur im optischen Modell, wobei die Maximalfläche aus einer Vielzahl von Subaperturen zusammengesetzt ist,
Berechnen eines Gütemaßes für jede Subapertur mittels der Gütefunktion, Bestimmen der Aperturgeometrie anhand der berechneten Gütemaße der Subaperturen.

Das erfindungsgemäße Verfahren ermöglicht somit eine Anpassung der Aperturgeometrie an den Strahlengang im Spektrometer. Dafür wird zunächst ein optisches Modell vorgegeben, in welchem die Position und Ausrichtung der optischen Komponenten vorgegeben und der Strahlengang der Lichtbündel beschrieben ist. Im optischen Modell kann auch eine Flächenform der optischen Komponenten vorgegeben sein. Das optische Modell kann eine mathematische Beschreibung der Positionen und Ausrichtungen der optischen Komponenten umfassen und dazu ausgestaltet sein, anhand dessen den Strahlengang berechnen. Zusätzlich wird eine Gütefunktion aufgestellt, welche zur Berechnung eines Gütemaßes dient. Das Gütemaß wird anhand des optischen Modells berechnet.

Die Gütefunktion kann dazu ausgestaltet sein, das optische Modell zur Berechnung des Gütemaßes einzusetzen. Die Gütefunktion kann das mindestens eine Gütemaß anhand des optischen Modells unter Berücksichtigung des mindestens einen Gütekriteriums berechnen. Dabei kann die Gütefunktion dazu ausgestaltet sein, zu prüfen, inwieweit das optische Modell bzw. der Strahlengang das mindestens eine Gütekriterium erfüllt, und anhand dieser Prüfung das Gütemaß zu berechnen. Die Gütefunktion ist insbesondere derart ausgestaltet, dass kleinere Wert der berechneten Gütemaße mit einer größeren Erfüllung des mindestens einen Gütekriteriums zusammenhängen, während höhere Werte der berechneten Gütemaße mit einer geringeren Erfüllung des mindestens einen Gütekriteriums einhergehen. Die Gütefunktion kann auch derart ausgestaltet sein, dass größere Werte der berechneten Gütemaße mit einer größeren Erfüllung des mindestens einen Gütekriteriums zusammenhängen. Das mindestens eine Gütekriterium kann eine Spektrometer-Charakteristik bzw. eine Spektrometer-Eigenschaft beschreiben. Insbesondere wird als das mindestens eine Gütekriterium eine solche Spektrometer-Charakteristik gewählt, welche einen großen Einfluss auf die Maße des Spektrometers oder das Spektrum hat.

Ein weiterer Schritt sieht vor, dass die Position der Aperturblende und die Maximalfläche der Apertur im optischen Modell vorgegeben wird. Die Maximalfläche der Apertur kann anhand gängiger Aperturgeometrien, anhand des Lichtdurchsatzes und/oder weiterer Kriterien vorgegeben werden. Die Maximalfläche ist insbesondere eine Fläche, die die Apertur maximal einnehmen soll. Die Maximalfläche ist insbesondere plan. Es kann auch eine Form der Maximalfläche vorgegeben werden; insbesondere kann die Form der Maximalfläche rund, elliptisch oder rechteckig sein. Die Maximalfläche ist aus einer Vielzahl von Subaperturen zusammengesetzt. Die Maximalfläche weist insbesondere einen vorgegebenen Flächeninhalt auf. Die Maximalfläche ist insbesondere mindestens so groß gewählt, dass alle Lichtbündel, welche den Detektor erreichen, durch die Maximalfläche hindurchtreten.

Bevorzugt weisen die Subaperturen jeweils den gleichen Flächeninhalt auf. Die Flächeninhalte der Subaperturen können sich aber auch voneinander unterscheiden. Die Form der Subaperturen kann beliebig gewählt werden, beispielsweise kann eine rechteckige oder quadratische Form der Subaperturen vorgegeben werden. Mittels der Gütefunktion wird nun ein Gütemaß für jede Subapertur berechnet. Anhand der berechneten Gütemaße wird ersichtlich, inwieweit die Subaperturen das mindestens eine Gütekriterium erfüllen. Beispielsweise können in manchen Subaperturen unerwünschte Lichtbündel auftreten, welche bspw. von Reflexionen stammen und die sich negativ auf das Spektrum und damit ggf. auch negativ auf das berechnete Gütemaß auswirken. Anhand der Gütemaße für die Subaperturen wird schließlich die Aperturgeometrie bestimmt. Insbesondere werden mehrere, d.h. zwei oder mehr, Subaperturen anhand ihres Gütemaßes ausgewählt und es wird anhand der ausgewählten Subaperturen die Aperturgeometrie gebildet. Das Auswählen der Subaperturen kann iterativ erfolgen, insbesondere wenn die berechneten Gütemaße der Subaperturen mathematisch nicht unabhängig voneinander sind.

In einer Weiterbildung weist das Bestimmen der Aperturgeometrie anhand der Gütemaße der Subaperturen die folgenden Schritte auf:
Vorgeben eines Flächeninhalts, welche die Aperturgeometrie aufweisen soll, Bilden einer Mehrzahl von Gruppen von Subaperturen, deren Flächeninhalte in Summe dem vorgegebenen Flächeninhalt entspricht,
Bilden der Summe der berechneten Gütemaße für jede Gruppe von Subaperturen,
Auswählen derjenigen Gruppe von Subaperturen, deren Summe der berechneten Gütemaße den kleinsten Wert aufweist,
Bilden der Aperturgeometrie anhand der ausgewählten Gruppe von Subaperturen.

Der vorgegebene Flächeninhalt kann sich beispielsweise nach einem gewünschten geometrischen Lichtdurchsatz bestimmen. Es ist aber auch möglich, im optischen Modell an die Position der Aperturblende zunächst eine Hilfs-Aperturblende einzusetzen, welche eine gängige Aperturgeometrie aufweist, und mittels der Hilfs-Aperturblende den Strahlengang und/oder die optischen Komponenten zu optimieren, um bspw. einen gewünschten geometrischen Lichtdurchsatz zu erreichen. Um diesen gewünschten geometrischen Lichtdurchsatz beizubehalten, bietet es sich an, den Flächeninhalt der Hilfs-Aperturblende als den Flächeninhalt vorzugeben, welche die Aperturgeometrie aufweisen soll. Für das erfindungsgemäße Verfahren wird die Hilfs-Aperturblende wieder aus dem optischen Modell entfernt.

Anschließend wird eine Mehrzahl, d.h. zwei oder mehr, von Gruppen von Subaperturen gebildet. Die Summe der Flächeninhalte der Subaperturen jeder Gruppe entspricht dabei dem vorgegebenen Flächeninhalt. Weiterhin wird für jede Gruppe von Subaperturen die Summe der berechneten Gütemaße der der Gruppe zugehörigen Subaperturen gebildet. In einem nächsten Schritt wird dann diejenige Gruppe von Subaperturen ausgewählt, deren Summe der berechneten Gütemaße den kleinsten Wert aufweist, und anhand der ausgewählten Gruppe von Subaperturen wird schließlich die Aperturgeometrie gebildet. Wie oben bereits beschrieben, ist die Gütefunktion in der Regel derart definiert, dass kleinere Werte der berechneten Gütemaße mit einer größeren Erfüllung des mindestens einen Gütekriteriums einhergehen. Im Falle, dass die Gütefunktion derart ausgestaltet ist, dass größere Werte der berechneten Gütemaße mit einer größeren Erfüllung des mindestens einen Gütekriteriums einhergehen, sollte in dieser Ausgestaltung folglich diejenige Gruppe von Subaperturen ausgewählt werden, deren Summe der berechneten Gütemaße den höchsten Wert aufweist.

In einer alternativen Weiterbildung weist das Bestimmen der Aperturgeometrie anhand der Gütemaße der Subaperturen den folgenden Schritt auf:
Bilden der Aperturgeometrie aus denjenigen Subaperturen, deren Summe der berechneten Gütemaße einen vorgegebenen Grenzwert unterschreitet.

In diesem Fall wird ein Grenzwert für die berechneten Gütemaße vorgegeben und es werden diejenigen Subaperturen ausgewählt, deren Summe der berechneten Gütemaße den vorgegebenen Grenzwert unterschreitet. Wie oben bereits beschrieben, ist die Gütefunktion in der Regel derart definiert, dass kleinere Werte der berechneten Gütemaße mit einer größeren Erfüllung des mindestens einen Gütekriteriums einhergehen. Dementsprechend wird diejenigen Subaperturen ausgewählt, deren berechneten Gütemaße in Summe den vorgegebenen Grenzwert unterschreitet. Im Falle, dass die Gütefunktion derart ausgestaltet ist, dass größere Werte der berechneten Gütemaße mit einer größeren Erfüllung des mindestens einen Gütekriteriums einhergehen, sollten in dieser Ausgestaltung folglich diejenigen Subaperturen ausgewählt werden, deren berechnetes Gütemaß in Summe den vorgegebenen Grenzwert überschreitet. Aus den ausgewählten Subaperturen wird dann die Aperturgeometrie gebildet.

In einer Weiterbildung wird als bestimmte Aperturgeometrie eine einzelne Apertur oder eine aus mehreren voneinander beabstandeten Teilbereichen zusammengesetzte Apertur erhalten. Die bestimmte Aperturgeometrie kann somit eine zusammenhängende Fläche aufweisen oder mehrere, d.h. zwei oder mehr, voneinander getrennte Flächen.

In einer Ausgestaltung wird für jede Subapertur mittels der Gütefunktion ein Gütemaß für einen Anteil der Lichtbündel berechnet, welcher die jeweilige Subapertur durchläuft. Der Anteil der Lichtbündel, welche die jeweilige Subapertur durchläuft, kann sehr unterschiedlich ausfallen. So kann es sein, dass manche Subaperturen von nur wenigen oder einem einzelnen Lichtbündel durchlaufen werden, während andere von mehreren oder von einer hohen Anzahl von Lichtbündeln durchlaufen werden. Da der Strahlengang aus dem optischen Modell bekannt ist, kann anhand des optischen Modells erkannt werden, welche Lichtbündel welche Subapertur durchlaufen. Folglich kann mittels der Gütefunktion ein Gütemaß für denjenigen Anteil der Lichtbündel berechnet werden, welche die entsprechende Subapertur durchläuft.

In einer weiteren Ausgestaltung wird eine bananenförmige Aperturgeometrie bestimmt. Auch weitere nicht-gängige Aperturgeometrien sind bestimmbar, wie beispielsweise trapez- oder rautenförmige Aperturgeometrien. Es ist auch möglich, dass eine gängige Aperturgeometrie, wie bspw. eine kreisförmige, elliptische oder rechteckige Aperturgeometrie bestimmt wird, die dann besonders gut an die Lichtbündel des Strahlengangs angepasst ist. Insbesondere für Spektrometer mit einem komplexen Aufbau aus vielen optischen Komponenten werden aber in der Regel nicht-gängige Aperturgeometrien erhalten werden.

Eine weitere Ausgestaltung sieht vor, dass als das mindestens eine Gütekriterium ein Gütekriterium für eine Spektrometer-Geometrie, ein Gütekriterium für Abbildungsfehler und/oder ein Gütekriterium für parasitäre Bündelverläufe verwendet wird. Das Gütekriterium für die Spektrometer-Geometrie bezieht sich insbesondere auf die Maße des Spektrometers. Dabei kann es von Vorteil sein, beispielsweise ein Spektrometer mit kleinen Maßen oder mit einer vorgegebenen Ausdehnung in einer Länge zu erhalten. Das Gütekriterium für Abbildungsfehler bezieht sich insbesondere auf Abbildungsfehler im Spektrum. Wünschenswert ist dabei möglichst wenige Abbildungsfehler zu erhalten. Das Gütekriterium für parasitäre Bündelverläufe bezieht sich insbesondere auf unerwünschte Lichtbündel, die sich negativ auf das Spektrum auswirken und bspw. von Reflexionen an optischen Komponenten stammen.

In einer Weiterbildung umfasst die Gütefunktion mehrere Gütekriterien des Strahlengangs, wobei die Gütefunktion anhand des optischen Modells und einer vorgegebenen Gewichtung der Gütekriterien ein Gütemaß berechnet. Der Ausdruck "mehrere Gütekriterien" bedeutet, dass zwei oder mehr Gütekriterien verwendet werden. So kann die Gütefunktion ein erstes Gütekriterium für die Spektrometer-Geometrie, ein zweites Gütekriterium für Abbildungsfehler und ein drittes Gütekriterium für parasitäre Bündelverläufe beschreiben. Die mehreren Gütekriterien können mittels einer "UND"-Verknüpfung in der Gütefunktion verknüpft sein.

In einer Ausgestaltung wird die Aperturblende im Strahlengang vor oder hinter einem Spalt des Spektrometers angeordnet. Der Spalt kann ein Eintrittsspalt des Spektrometers sein. Vorzugsweise ist die Aperturblende benachbart zum Spalt angeordnet. Zwischen dem Spalt und der Aperturblende kann eine optische Komponente, beispielsweise ein Spiegel, angeordnet sein. Bevorzugt ist die Aperturblende im Strahlengang zum Detektor vor dem Spalt angeordnet.

In einer Weiterbildung wird die Aperturblende an einer Position des Strahlengangs angeordnet, an welcher die Lichtbündel spektral aufgespalten oder nicht spektral aufgespalten vorliegt. Ist die Aperturblende bspw. benachbart zum Spalt, so sind die Lichtbündel an der Position der Aperturblende in der Regel noch nicht spektral aufgespalten. Ist die Aperturblende bspw. hinter einem Gitter oder näher zum Detektor angeordnet, so können die Lichtbündel an der Position der Aperturblende spektral aufgespalten vorliegen. In diesem Fall kann aufgrund der Aufspaltung der Lichtbündel hinsichtlich ihrer Wellenlängen ggf. eine besonders gute Anpassung der Aperturgeometrie hinsichtlich der Abbildungsfehler erreicht werden.

Vorteilhafterweise werden als optische Komponenten Spiegel, Filter, Gitter, Prismen und/oder Linsen verwendet.

In einer Weiterbildung wird als eine der optischen Komponenten ein Echelle-Gitter verwendet.

Bevorzugt wird als Spektrometer in einem ICP-OES-Gerät oder AAS-Gerät verwendet. ICP-OES steht für "inductively coupled plasma optical emission spectroscopy". Beim ICP-OES-Gerät handelt es sich um eine Emissionsspektroskopie, bei der ein induktiv gekoppeltes Plasma zur Erzeugung angeregter Atome und Ionen verwendet wird, die elektromagnetische Strahlung mit den für ein bestimmtes Element charakteristischen Wellenlängen emittieren. AAS steht für Atomabsorptionsspektroskopie. Die AAS ist ein spektroanalytisches Verfahren zur quantitativen Bestimmung chemischer Elemente durch freie Atome im gasförmigen Zustand. Die Atomabsorptionsspektroskopie beruht auf der Absorption von Licht durch freie Atome und Moleküle. Sowohl das ICP-OES- als auch das AAS-Gerät weisen häufig eine hohe Zahl an optischen Komponenten und insbesondere ein Echelle-Gitter auf. Beide Geräte dienen zur Analyse von Proben hinsichtlich ihrer atomaren Zusammensetzung. Für beide Geräte ist das vorgeschlagene Verfahren besonders vorteilhaft, da aufgrund des komplexen Strahlengangs gängige Aperturgeometrien in der Regel kein optimales Ergebnis hinsichtlich des mindestens einen Gütekriteriums liefern.

Die der vorliegenden Erfindung zugrunde liegende Aufgabe wird ferner gelöst durch ein Verfahren zur Herstellung einer Aperturblende mit einer Apertur, deren Aperturgeometrie an einen Strahlengang von Lichtbündeln in einem Spektrometer angepasst ist, wobei das Spektrometer die Aperturblende, mehrere optische Komponenten und einen Detektor aufweist, wobei die optischen Komponenten derart angeordnet und ausgestaltet sind, dass sie den Strahlengang der Lichtbündel von einer Lichtquelle zum Detektor führen, wobei der Detektor dazu ausgestaltet ist, die Lichtbündel in Form eines Spektrums zu detektieren, wobei das Verfahren zumindest die folgenden Schritte aufweist:
Bestimmen der Aperturgeometrie nach einer der vorherigen Ausgestaltungen,
Bereitstellen eines Rohlings für die Aperturblende,

Ausnehmen mindestens eines Bereichs des Rohlings, welche der bestimmten Aperturgeometrie entspricht.

Mittels des erfindungsgemäßen Verfahrens wird somit eine Aperturblende erhalten, welche die bestimmte Aperturgeometrie aufweist. Der Rohling kann beispielsweise ein Metall- oder Plastikteil sein. Das Ausnehmen des mindestens einen Bereichs des Rohlings, welche der bestimmten Aperturgeometrie entspricht, kann mittels Fräsen oder Schneidens erfolgen. Optional kann der Rohling vor oder nach dem Schritt des Ausnehmens derart bearbeitet werden, dass er eine schwarze Oberfläche aufweist. Alternativ kann die Aperturblende mittels eines additiven Fertigungsverfahrens, wie beispielsweise 3D-Druck, hergestellt werden.

Die der vorliegenden Erfindung zugrunde liegende Aufgabe wird weiterhin gelöst durch ein Spektrometer mit mehreren optischen Komponenten, einem Detektor und einer Aperturblende, welche nach dem Verfahren nach der vorherigen Ausgestaltung hergestellt ist, wobei die optischen Komponenten derart angeordnet und ausgestaltet sind, dass sie den Strahlengang der Lichtbündel von einer Lichtquelle zum Detektor führen, wobei der Detektor dazu ausgestaltet ist, die Lichtbündel in Form eines Spektrums zu detektieren.

In dem erfindungsgemäßen Spektrometer ist somit eine Aperturblende eingesetzt, deren Aperturgeometrie an den Strahlengang im Spektrometer angepasst ist.

Im Weiteren wird die vorliegende Erfindung anhand der nachfolgenden Figuren Fig. 1-4 näher erläutert werden. Sie zeigen:
Fig. 1: eine schematische Darstellung eines erfindungsgemäßen Spektrometers.
Fig. 2: eine schematische Darstellung der Maximalfläche, der Subaperturen und der bestimmten Aperturgeometrie.
Fig. 3: eine schematische Darstellung des Rohlings bzw. der Aperturblende.
Fig. 4: eine weitere Darstellung einer erfindungsgemäß hergestellten Aperturblende.

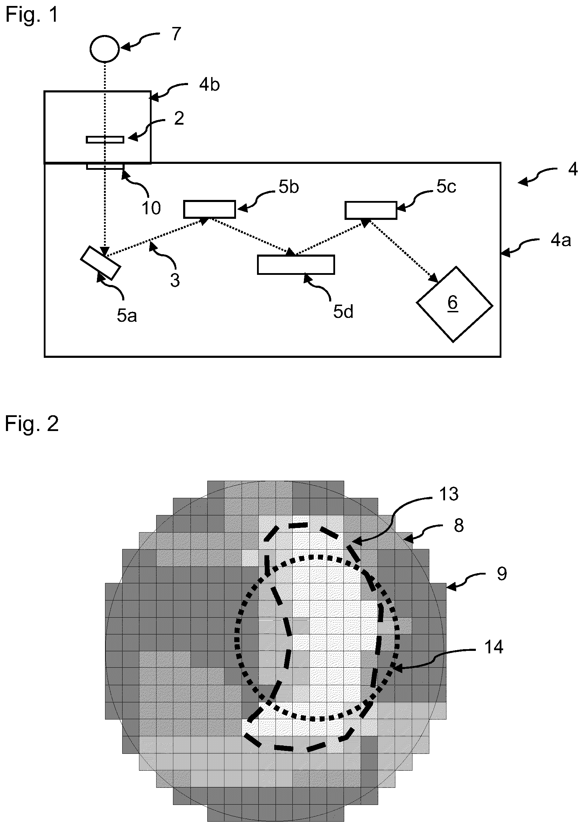

In Fig. 1 ist eine schematische Darstellung des erfindungsgemäßen Spektrometers 4 gezeigt. Das Spektrometer 4 umfasst mehrere optische Komponenten, eine Aperturblende 2 und einen Detektor 6. Die optischen Komponenten 5 sind derart angeordnet und ausgestaltet, dass sie den Strahlengang 3 der Lichtbündel von einer Lichtquelle 7 zum Detektor 6 führen. Der Detektor 6 ist dazu ausgestaltet, die Lichtbündel in Form eines Spektrums zu detektieren. Das Spektrometer 4 kann in mehrere Abschnitte unterteilt sein, bspw. in einen Hauptbereich 4a und einen Vorbereich 4b. Der Vorbereich 4b kann zwischen der Lichtquelle 7 und dem Hauptbereich 4a angeordnet sein. Der Vorbereich 4b kann dazu ausgestaltet sein, die von der Lichtquelle 7 ausgesandten Lichtbündel zu sammeln und in den Hauptbereich 4a zu führen. Der Vorbereich 4b kann weitere optische Komponenten aufweisen, wie bspw. eine Eingangsöffnung oder Spiegel oder Linsen, welche der Übersichtlichkeit halber nicht gezeigt sind. Das Spektrometer 4 kann einen Spalt 10 aufweisen. Der Spalt 10 kann zwischen dem Hauptbereich 4a und dem Vorbereich 4b angeordnet sein. Die Aperturblende 2 kann benachbart zum Spalt 10 angeordnet sein. Die optischen Komponenten 5a,5b,5c können Spiegel sein. Die optische Komponente 5d ist beispielhaft als Echelle-Gitter ausgestaltet. Weitere optische Komponenten können Filter, Prismen und/oder Linsen sein. Das Spektrometer 4 kann ein ICP-OES-Gerät oder ein AAS-Gerät sein.

Fig. 2 zeigt beispielhaft, wie die Aperturgeometrie anhand der Gütemaße der berechneten Subaperturen 9 bestimmt wird. Wie bereits beschrieben, wird im erfindungsgemäßen System zunächst ein optisches Modell vorgegeben, welches den Strahlgang 3 beschreibt. Zudem wird eine Gütefunktion mit mindestens einem Gütekriterium aufgestellt. Weiterhin wird eine Position der Aperturblende 2 und eine Maximalfläche 8 der Apertur 1 im optischen Modell vorgegeben. Eine solche Maximalfläche 8 ist in Fig. 2 in Form eines Kreises dargestellt. Die Maximalfläche 8 kann auch eine andere Form oder Größe aufweisen. Die Maximalfläche 8 ist aus einer Vielzahl von Subaperturen 9 zusammengesetzt. Im gezeigten Beispiel sind die Subaperturen 9 quadratisch ausgestaltet; die Subaperturen 9 können jedoch auch eine andere Form aufweisen; auch müssen die Subaperturen 9 nicht alle dieselbe Form und Größe aufweisen. In einem nächsten Schritt wird für jede Subapertur 9 mittels der Gütefunktion ein Gütemaß berechnet. Das berechnete Gütemaß ist als Graustufe in der Fig. 2 gezeigt. Dabei weisen hellere Flächen einen kleineren Wert des berechneten Gütemaßes auf als dunklere Flächen. Anhand der berechneten Gütemaße der Subaperturen 9 wird schließlich die Aperturgeometrie bestimmt. Schematisch ist durch die gestrichelte Linie 13 eingezeichnet, wie die bestimmte Aperturgeometrie aussehen kann.

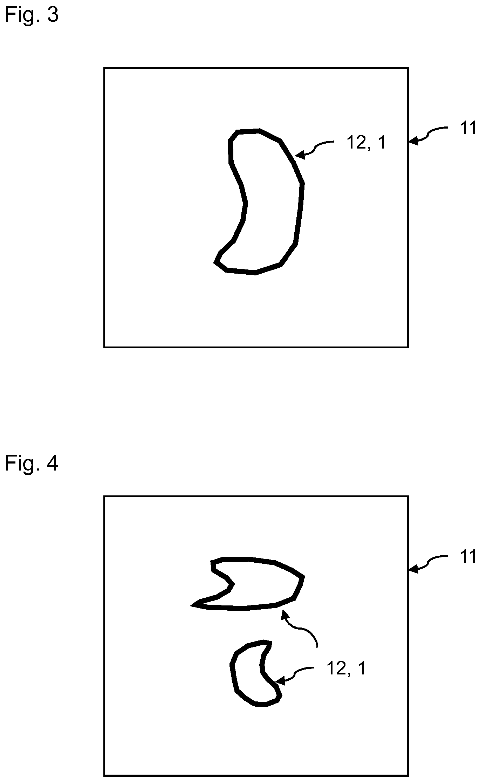

Wie anhand der Darstellung in Fig. 2 erkennbar ist, gibt es eine Mehrzahl von Subaperturen mit einem kleinen Gütemaß, d.h. einer hellen Fläche, wobei die Anordnung dieser Subaperturen keiner gängigen Aperturgeometrie folgt. Die gestrichelte Linie 14 zeigt an, wie eine gängige, kreisförmige Aperturgeometrie aussieht, welche nicht mittels des erfindungsgemäßen Verfahrens angepasst wurde. Es wird deutlich, dass bei Verwendung der kreisförmigen Aperturgeometrie einige Subaperturen 9 mit einem kleinen Gütemaß außerhalb der Apertur 1 liegen und dafür Subaperturen 9 mit einem deutlich höheren Gütemaß innerhalb der Apertur liegen. Somit gelangen Lichtbündel auf den Detektor 6, welche sich negativ auf das Spektrum oder das Spektrometer auswirken, da sie bspw. für Abbildungsfehler sorgen. Umgekehrt werden einige Lichtbündel, die einen positiven Beitrag leisten, von der Aperturblende geblockt und gelangen somit nicht zum Detektor 6. Hingegen werden bei der bestimmten Aperturgeometrie, welche durch die gestrichelte Linie 13 dargestellt ist, möglichst alle Subaperturen 9 mit einem kleinen berechneten Gütemaß von der Aperturgeometrie erfasst. Im gezeigten Beispiel wird somit eine bananenförmige Aperturgeometrie erhalten. Das in Fig. 2 gezeigte Beispiel der Aperturgeometrie zeigt eine einzelne Apertur. Es ist jedoch auch möglich, dass eine aus mehreren voneinander beabstandeten Teilbereichen zusammengesetzte Apertur erhalten wird, wie beispielhaft in Fig. 4 gezeigt.

Das Bestimmen der Aperturgeometrie anhand der berechneten Gütemaße kann auf verschiedene Arten erfolgen. Zum Beispiel kann ein Grenzwert vorgegeben werden und die Aperturgeometrie aus allen solchen Subaperturen 9, deren Summe der berechneten Gütemaße den Grenzwert unterschreitet, gebildet werden. Alternativ kann auch ein Flächeninhalt vorgegeben werden, den die Aperturgeometrie aufweisen soll und eine Mehrzahl an Gruppen von Subaperturen 9 gebildet werden, deren Summe an Flächeninhalten dem vorgegebenen Flächeninhalt entspricht. Anschließend kann die Summe der berechneten Gütemaße für jede Gruppe an Subaperturen berechnet und diejenige Gruppe von Subaperturen mit dem kleinsten Wert der Summe ausgewählt werden. Anhand der ausgewählten Gruppe wird dann die Aperturgeometrie gebildet.

Die solchermaßen bestimmte Aperturgeometrie kann zum Herstellen einer Aperturblende 2 verwendet werden. Dafür wird ein Rohling 11 bereitgestellt (vgl. Fig. 3), bei dem mindestens ein Bereich 12 ausgenommen wird, dessen Form der bestimmten Aperturgeometrie entspricht. Der mindestens eine Bereich 12 bildet dann die Apertur 1 der Aperturblende 2.

### Bezugszeichenliste

- 1: Apertur
- 2: Aperturblende
- 3: Strahlengang
- 4: Spektrometer
- 4a: Hauptbereich
- 4b: Vorbereich
- 5: optische Komponente
- 5a: Spiegel
- 5b: Spiegel
- 5c: Spiegel
- 5d: Echelle-Gitter
- 6: Detektor
- 7: Lichtquelle
- 8: Maximalfläche
- 9: Subaperturen
- 10: Spalt
- 11: Rohling
- 12: Bereich
- 13: bestimmte Aperturgeometrie
- 14: kreisförmige Vergleichsapertur

## Patentansprüche

1. Verfahren zur Anpassung einer Aperturgeometrie einer Apertur (1) einer Aperturblende (2) an einen Strahlengang (3) von Lichtbündeln in einem Spektrometer (4), wobei das Spektrometer (4) die Aperturblende (2), mehrere optische Komponenten (5) und einen Detektor (6) aufweist, wobei die optischen Komponenten (5) derart angeordnet und ausgestaltet sind, dass sie den Strahlengang (3) der Lichtbündel von einer Lichtquelle (7) zum Detektor (6) führen, wobei der Detektor (6) dazu ausgestaltet ist, die Lichtbündel in Form eines Spektrums zu detektieren, wobei das Verfahren zumindest die folgenden Schritte aufweist:
Vorgeben eines optischen Modells, welches den Strahlengang (3) beschreibt und die optischen Komponenten (5) sowie deren Position und Ausrichtung umfasst,
Aufstellen einer Gütefunktion, welche mindestens ein Gütekriterium des Strahlengangs (3) umfasst, wobei die Gütefunktion dazu ausgestaltet ist, anhand des optischen Modells ein Gütemaß zu berechnen,
Vorgeben einer Position der Aperturblende (2) und einer Maximalfläche (8) der Apertur (1) im optischen Modell, wobei die Maximalfläche (8) aus einer Vielzahl von Subaperturen (9) zusammengesetzt ist,
Berechnen eines Gütemaßes für jede Subapertur (9) mittels der Gütefunktion, Bestimmen der Aperturgeometrie anhand der berechneten Gütemaße der Subaperturen (9).

2. Verfahren nach Anspruch 1,
wobei das Bestimmen der Aperturgeometrie anhand der Gütemaße der Subaperturen (9) die folgenden Schritte aufweist:
Vorgeben eines Flächeninhalts, welche die Aperturgeometrie aufweisen soll,
Bilden einer Mehrzahl von Gruppen von Subaperturen (9), deren Flächeninhalt in Summe dem vorgegebenen Flächeninhalt entspricht,
Bilden der Summe der berechneten Gütemaße für jede Gruppe von Subaperturen (9),
Auswählen derjenigen Gruppe von Subaperturen (9), deren Summe der berechneten Gütemaße den kleinsten Wert aufweist,
Bilden der Aperturgeometrie anhand der ausgewählten Gruppe von Subaperturen (9).

3. Verfahren nach Anspruch 1,
wobei das Bestimmen der Aperturgeometrie anhand der Gütemaße der Subaperturen (9) den folgenden Schritt aufweist:
Bilden der Aperturgeometrie aus denjenigen Subaperturen (9), deren Summe der berechneten Gütemaße einen vorgegebenen Grenzwert unterschreitet.

4. Verfahren nach einem der vorherigen Ansprüche,
wobei als bestimmte Aperturgeometrie eine einzelne Apertur (1) oder eine aus mehreren voneinander beabstandeten Teilbereichen zusammengesetzte Apertur (1) erhalten wird.

5. Verfahren nach einem der vorherigen Ansprüche,
wobei für jede Subapertur (9) mittels der Gütefunktion ein Gütemaß für einen Anteil der Lichtbündel berechnet wird, welcher die jeweilige Subapertur (9) durchläuft.

6. Verfahren nach einem der vorherigen Ansprüche,
wobei eine bananenförmige Aperturgeometrie bestimmt wird.

7. Verfahren nach einem der vorherigen Ansprüche,
wobei als das mindestens eine Gütekriterium ein Gütekriterium für eine Spektrometer-Geometrie, ein Gütekriterium für Abbildungsfehler und/oder ein Gütekriterium für parasitäre Bündelverläufe verwendet wird.

8. Verfahren nach einem der vorherigen Ansprüche,
wobei die Gütefunktion mehrere Gütekriterien des Strahlengangs (3) umfasst,
wobei die Gütefunktion anhand des optischen Modells und einer vorgegebenen Gewichtung der Gütekriterien ein Gütemaß berechnet.

9. Verfahren nach einem der vorherigen Ansprüche,
wobei die Aperturblende (2) im Strahlengang (3) vor oder hinter einem Spalt (10) des Spektrometers (4) angeordnet wird.

10. Verfahren nach einem der vorherigen Ansprüche,
wobei die Aperturblende (2) an einer Position des Strahlengangs (3) angeordnet wird, an welcher die Lichtbündel spektral aufgespalten oder nicht spektral aufgespalten vorliegt.

11. Verfahren nach einem der vorherigen Ansprüche,
wobei als optische Komponenten (5) Spiegel, Filter, Gitter, Prismen und/oder Linsen verwendet werden.

12. Verfahren nach einem der vorherigen Ansprüche,
wobei als eine der optischen Komponenten (5) ein Echelle-Gitter verwendet wird.

13. Verfahren nach einem der vorherigen Ansprüche,
wobei als Spektrometer (4) in einem ICP-OES-Gerät oder AAS-Gerät verwendet wird.

14. Verfahren zur Herstellung einer Aperturblende (2) mit einer Apertur (1), deren Aperturgeometrie an einen Strahlengang (3) von Lichtbündeln in einem Spektrometer (4) angepasst ist, wobei das Spektrometer (4) die Aperturblende (2), mehrere optische Komponenten (5) und einen Detektor (6) aufweist, wobei die optischen Komponenten (5) derart angeordnet und ausgestaltet sind, dass sie den Strahlengang (3) der Lichtbündel von einer Lichtquelle (7) zum Detektor (6) führen, wobei der Detektor (6) dazu ausgestaltet ist, die Lichtbündel in Form eines Spektrums zu detektieren, wobei das Verfahren zumindest die folgenden Schritte aufweist:
Bestimmen der Aperturgeometrie nach einem der vorherigen Ansprüche, Bereitstellen eines Rohlings (11) für die Aperturblende,
Ausnehmen mindestens eines Bereichs (12) des Rohlings (11), welche der bestimmten Aperturgeometrie entspricht.

15. Spektrometer (4) mit mehreren optischen Komponenten (5), einem Detektor (6) und einer Aperturblende (2), welche nach dem Verfahren nach Anspruch 14 hergestellt ist, wobei die optischen Komponenten (5) derart angeordnet und ausgestaltet sind, dass sie den Strahlengang (3) der Lichtbündel von einer Lichtquelle (7) zum Detektor (6) führen, wobei der Detektor (6) dazu ausgestaltet ist, die Lichtbündel in Form eines Spektrums zu detektieren.
